Europäisches Patentamt

**(19)** European Patent Office

Office européen des brevets

**(11)** Publication number : **0 581 631 A1**

## **(12)** EUROPEAN PATENT APPLICATION

**(21)** Application number : **93401777.3**

**(22)** Date of filing : **08.07.93**

**(51)** Int. Cl.$^5$ : **D21C 9/153**, D21C 5/02

**(30)** Priority : **31.07.92 US 923141**

**(43)** Date of publication of application :
**02.02.94 Bulletin 94/05**

**(84)** Designated Contracting States :
**BE CH DE ES FR IT LI NL PT SE**

**(71)** Applicant : **L'AIR LIQUIDE, SOCIETE
ANONYME POUR L'ETUDE ET
L'EXPLOITATION DES PROCEDES GEORGES
CLAUDE
75, Quai d'Orsay
F-75321 Paris Cédex 07 (FR)**

**(72)** Inventor : **Muguet, Michel
2101 North Racine
Chicago, Illinois 60614 (US)**
Inventor : **Kogan, Jack
9300 Bennett Avenue
Skokie, Illinois 60203 (US)**

**(74)** Representative : **Le Moenner, Gabriel et al
L'AIR LIQUIDE, Société Anonyme pour l'étude
et l'exploitation des procédés Georges Claude
75, Quai d'Orsay
F-75321 Paris Cédex 07 (FR)**

**(54)** Selective treatment of pulp with ozone.

**(57)** A method of improving the quality of virgin high yield pulp and pulp made of recycled paper. Pulp is fractionated to produce a first fraction rich in long fibers and a second fraction rich in short fibers. The first fraction only is subjected to ozone whereupon the first and second fractions are recombined to produce paper products.

EP 0 581 631 A1

TECHNICAL FIELD OF THE INVENTION

The present invention deals with a method of improving the quality of virgin high yield pulp and pulp made of recycled paper. The strength of the product made from such pulp is dramatically improved by subjecting the pulp to ozone in a selected fashion.

BACKGROUND OF THE INVENTION

As society has become increasingly environmentally conscious, there has been a growing trend to recycle a wide variety of consumable products including newspapers and other wood pulp based materials. It has further been recognized that in any wood pulp recycling operation, impressively large volumes of water are required and it has been the thrust of recycling research to reduce these significant water requirements.

Investigations have been carried out for improving interfiber bonding of wood pulp based products by using a number of gas phase reagents. These include chlorine dioxide, nitrogen dioxide and ozone as gaseous oxidizing agents. These various oxidative treatments have been known to increase the interfiber bonding strengths of lignocellulosics as well as to upgrade high lignin-content mechanical pulps. Specifically, ozone has been reported as significantly increasing the tensile index of such lignocellulosics as noted in an article entitled *"Improving Interfiber Bonding of Recycled Fibers"* by Minor et al., published in 1991 Recycling Forum. It was reported that surface oxidation causing an increase in carboxylic acids and possibly surface delignification improves tensile strength.

Similar investigations were reported in a paper entitled *"The Use of Ozone In The Pulp and Paper Industry"* by J. Gangolli, Paper Technology and Industry, June 1982, pp. 152 to 158. It was observed that mechanical-pulp ozonation has resulted in pulps of increased strength at the expense of a few units of brightness. The strength enhancement of mechanical pulps has been attributed to increases in bonding potential between ozonated fibers. The author speculated that ozonation renders the fiber surfaces more hydrophilic through oxidation of surface material, mainly lignin.

Regardless of the theoretical underpinning for the various investigative studies which have been carried out, it is clear that ozone is capable of improving the pulp-strength properties of high yield groundwood, thermo mechanical pulp or TMP, chemi thermo mechanical pulp or CTMP. Although the reported benefits are substantial, ozone treatment of lignin rich pulps tends to be expensive, oftentimes produces undesirable side reactions and generates effluent which must be dealt with. As such, it is an object of the present invention to employ ozone to restore the original strength of waste papers while minimizing the amount of ozone employed.

It is yet another object of the present invention to increase the strength of paper products produced from virgin high yield pulp.

It is still an additional object of the present invention to carry out the above-recited objects while minimizing the quantity of ozone used.

These and further objects will be more readily appreciated when considering the following disclosure and appended claims.

SUMMARY OF THE INVENTION

The present invention deals with methods of improving the quality of recycled paper as well as the quality of virgin high yield pulp. The methods comprise producing pulp from said paper or starting with high yield pulp which is then fractionated to produce a first fraction rich in long fibers and a second fraction rich in short fibers. The first fraction is subjected to ozone and recombined with the second fraction to produce paper products of enhanced strength.

When the recycled paper contains both chemical and mechanical pulp, a first fractionating step is carried out to produce a first fraction rich in long chemical pulp fibers and a second fraction rich in both long and short mechanical pulp fibers. This second fraction is then subjected to yet another fractionating step to produce a third fraction rich in long mechanical pulp fibers and a fourth fraction rich in short mechanical pulp fibers. It is this third fraction alone which is subjected to ozone and then recombined with the remaining fractions to produce the desired recycled paper.

DETAILED DESCRIPTION OF THE INVENTION

The present invention has particular applicability to the recycling of newspapers and magazines and in treating virgin high yield pulp, the former of which can contain a combination of chemical and mechanical pulp fibers. After standard repulping and optional de-inking processes, the pulp is routinely subjected to a fractionation step which is employed in order to separate long and short cellulosic fibers.

Fractionation is a physical screening process in which cellulosic fibers are sorted and separated into fractions according to their respective fiber lengths. Cellulosic material is provided as a homogeneous, dilute suspension of fibers in water at an average concentration of approximately 0.5 to 1.0%. The suspension is then subjected to fractionation meaning that the suspension is subjected to a fractionator equipped with hole or slot screening, the dimensions of which vary according to the desired fractionation ratio and type of fibers processed. For example, a waste paper pulp based on old newsprint can be fractionated such that 30.0 to 70.0% of the initial pulp can be recovered as a "long fiber fraction" based upon the dry weight of the pulp. The long and short fiber fractions are separated before additional processing treatments are carried out.

There are a number of parameters which dictate pulp fiber length. For example, whether the pulp process was a chemical or mechanical one has a direct bearing on fiber length. Chemically processed pulp softwood fibers are longer than chemically processed hardwood pulp fibers. Softwood fibers produced by chemi thermo mechanical processes or recycled papers produced by a mixture of chemical and mechanical processes generally possess a mixture of long fibers.

If the recycled pulp or virgin TMP contains substantially no chemically processed pulp, in other words, is composed of old newsprint free of kraft pulp, a single fractionation process can be carried out to separate the long fraction from the short one. This process would effectively fractionate the pulp to produce a first fraction rich in long fibers from a fraction rich in short fibers. It has been surprisingly discovered that if only the long and thus lignin-rich fibers are treated with ozone, the mechanical properties, as discussed above, of the recombined pulp can be dramatically improved. As such, the amount of ozone necessary to substantially strengthen the recycled pulp can be reduced as it was found that ozone has little or no effect on the lignin deficient short fiber component. It is contemplated that only approximately 0.5 to 3.0% ozone based upon the weight of the pulp in the long fiber rich-fraction need be employed.

When dealing with mixtures of both chemically and mechanically produced pulp such as when the pulp was produced from old newspaper and magazines, a two-step fractionation process is desirable. The first fractionation step is carried out to remove long chemical pulp fibers such as those approximately 3.5 mm in length. There is no seeming justification for treating these fibers with ozone and, in keeping with the desire to maximize the strength-enhancing effects of a given quantity of ozone employed in the process, its use is restricted to only long fibers of mechanically produced pulp.

Once the fraction rich in chemical pulp fibers has been segregated, the remaining fraction is, itself, separated into fractions rich in long and short mechanical pulp fibers. The long mechanical pulp fibers are then subjected to ozone treatment and the various pulp-containing fractions are then recombined to produce a recycled paper product.

There are a number of reactor configurations which can be employed in facilitating ozone contact with the appropriate long pulp fiber fraction. At low pulp consistencies (e.g. 0.1 to 3.0%), a stirred tank can be employed where ozone is bubbled through a sparger or porous plate. At medium consistencies (e.g. 8.0 to 15.0%), a pressure reactor can be employed where ozone is introduced through a high shear pressurized mixer. At high consistencies (e.g. 25.0 to 45.0%), a gas phase reactor can be employed where ozone is contacted with the pulp through the use of a fluffer.

Ideally, when the consistencies of long mechanically produced pulp fibers is low (approximately 0.1 to 3.0%) or high (approximately 25.0 to 45.0%) ozone pressure should be in the range of approximately 15 to 20 psig. However, when the consistency is in the approximately 8.0 to 15.0% range, ozone pressure should ideally be in the range of 50 to 150 psig. The present process can be carried out over a broad temperature range, ideally, between approximately 20 to 80°C. Reaction time is also not critical. It is noted that ozone treatment can ideally be carried out between 1 to 60 minutes while achieving the strength enhancing benefits being sought.

## EXPERIMENTAL DATA

A study was conducted to explore the evolution of physical properties after fractionation and subsequent ozone treatment of recycled thermo mechanical pulp as well as virgin TMP. As such, both the virgin pulp and printed and unprinted paper made of this pulp which was supplied by the printing industry for recycling were fractionated. The fractionated pulp was segregated into different fiber fractions which were treated with ozone and then recombined in the same proportions found in the original pulp before fractionation. Samples of the recombined pulp were tested for tensile, burst and tear indices.

Thickening. In order to obtain consistencies between 30.0 and 40.0%, the sample was centrifugated in a regular laboratory centrifuge.

Fluffins. After centrifugation, the pulp sample was fluffed in a regular laboratory fluffer. If necessary, the operation was repeated to improve the effectiveness of the process.

Ozone Treatment. Ozone was produced from oxygen in a 7 g/hr capacity ozone generator. The concentration of ozone was evaluated, measuring the amount of ozone in mg per unit of time. The gas mixture was bubbled through a gas washing bottle that contained 1N KI solution. The iodine ($I_2$) formed during this process was then titrated with $Na_2S_2O_3$. Data on ozone production (mg/min), amount of O.D. pulp, and desired ozone charge in percent on O.D. pulp was then recorded to calculate the "ozone exposure time" or reaction time for every sample.

The oxygen/ozone mixture was then injected in a rotatory glass reactor which contained the desired amount of pulp. Mixing was by rotation. The gas injection went on during the precalculated reaction time.

The outlet gases from the reactor were also bubbled through a KI solution to determine residual ozone after reaction, and from a second titration, ozone reactivity was easily calculated for every treatment.

$$\text{REACTIVITY \%} = \frac{O_3 \, \text{INJ} - O_3 \, \text{RESIDUAL}}{O_3 \, \text{INJ}} \times 100$$

Selective ozone treatment was further carried out on both the virgin and recycled thermo mechanical pulp. Fractions rich in long and short fibers were segregated and tested in each instance both before and after ozone treatment. In each case, the ozone charge was 3.0% based upon the weight of dry pulp in the fractionated sample.

The results have been summarized in Table 2 as follows:

## Table 2

| | Virgin TMP | | $O_3$ Treated Pulps | | |
|---|---|---|---|---|---|
| | Whole Pulp | Long Fiber Fraction | Long Fiber Fraction $O_3$ Treated | Whole Pulp $O_3$ Treated | Long Fiber Fraction $O_3$ Treated + Short Fiber Fraction |
| Tensile (lb/in) | 5.69 | 1.51 | 4.94 | 7.53 | 7.09 |
| Tensile Index (Nm/g) | 21.96 | 6.48 | 20.64 | 29.53 | 29.18 |
| Tear | 20.5 | 9.2 | 25.0 | 22.0 | 17.8 |
| Burst (psi) | 16.9 | 4.4 | 15.1 | 23.6 | 22.1 |
| $O_3$ Consumed % | - | - | 2.7 | 2.4 | 1.35 |

Pulp Consistency: 34%
$O_3$ Charge: 3% on Dry Pulp (by weight)

Similarly, selective ozone treatment was carried out on recycled unprinted thermo mechanical pulp. The same amount of ozone was employed as in the generation of data recited in Table 2, above. Once again, Table 3 illustrates the dramatic advantages which are achieved in practicing the present invention.

## Table 3

| | Newsprint Paper | | $O_3$ Treated Pulps | | |
|---|---|---|---|---|---|
| | Whole Pulp | Long Fiber Fraction | Long Fiber Fraction $O_3$ Treated | Whole Pulp $O_3$ Treated | Long Fiber Fraction $O_3$ Treated + Short Fiber Fraction |
| Tensile (lb/in) | 6.97 | 3.44 | 6.49 | 8.20 | 7.46 |
| Tensile Index (Nm/g) | 28.46 | 14.27 | 28.79 | 33.71 | 33.12 |
| Tear | 18.1 | 14.8 | 19.7 | 16.6 | 14.8 |
| Burst (psi) | 21.2 | 7.8 | 18.9 | 28.5 | 23.7 |
| $O_3$ Consumed % | - | - | 2.7 | 2.4 | 1.35 |

Pulp Consistency: 34%
$O_3$ Charge: 3% on Dry Pulp (by weight)

Finally, a similar selective ozone treatment was carried out on recycled printed thermo mechanical pulp which was de-inked prior to fractionation. These results have been tabulated in Table 4 as follows:

## Table 4

| | Recycled & Deinked Newsprint | | O₃ Treated Pulps | | |
|---|---|---|---|---|---|
| | Whole Pulp | Long Fiber Fraction | Long Fiber Fraction O₃ Treated | Whole Pulp O₃ Treated | Long Fiber Fraction O₃ Treated + Short Fiber Fraction |
| Tensile (lb/in) | 5.85 | 2.49 | 6.92 | 7.4 | 7.0 |
| Tensile Index (Nm/g) | 25.21 | 10.74 | 30.01 | 32.19 | 30.71 |
| Tear | 15.0 | 9.7 | 17.2 | 13.8 | 13.7 |
| Burst (psi) | 17.1 | 5.6 | 19.8 | 23.4 | 22.4 |
| O₃ Consumed % | - | - | 2.7 | 2.4 | 1.35 |

Pulp Consistency: 34%
O₃ Charge: 3% on Dry Pulp (by weight)

From the above-recited experimental results, it is seen that dramatic increases in paper strength are achieved in subjecting only certain long fiber rich pulp fractions to ozone.

## Claims

1. A method of improving the quality of recycled paper comprising producing pulp having long and short fibers from said paper; fractionating said pulp to produce a first fraction rich in long fibers and a second fraction rich in short fibers; subjecting only said first fraction to ozone; and recombining said first and second fractions in producing said recycled paper.

2. The method according to claim 1 wherein said first fraction comprises approximately 30.0 to 70.0% long fibers based upon the weight of said pulp.

3. The method according to claim 1 or 2 wherein ozone is introduced to said first fraction in a charge between approximately 0.5 to 3.0% based upon the weight of pulp in said first fraction.

4. The method according to one of claims 1 to 3 wherein said pulp contains substantially no chemical pulp.

5. The method according to one of claims 1 to 4 wherein when said pulp is contained in said first fraction at consistencies between approximately 0.1 to 3.0% or between approximately 25.0 to 45.0% by weight, said ozone is employed at pressures between approximately 15 to 20 psig.

6. The method according to one of claims 1 to 5 wherein when said pulp is contained in said first fraction at consistencies between approximately 8.0 to 15.0% by weight, said ozone is employed at pressures between approximately 50 to 150 psig.

7. The method according to one of claims 1 to 6 wherein said ozone is introduced into said first fraction while maintaining said first fraction at a temperature between approximately 20 to 80°C.

8. The method according to claims 1 to 7 wherein said ozone is introduced into said first fraction for a period of time between approximately 1 to 60 minutes.

9. The method according to one of claims 1 to 8 wherein said recycled paper comprises old newsprint substantially free of kraft pulp.

10. A method of improving the quality of recycled paper containing both chemical and mechanical pulp having long and short fibers, said method comprising: producing pulp from said paper; fractionating said pulp to produce a first fraction rich in long chemical pulp fibers, and a second fraction rich in both long and short mechanical pulp fibers; fractionating said second fraction to produce a third fraction rich in long mechanical pulp fibers and a fourth fraction rich in short mechanical pulp fibers; subjecting only said third fraction to ozone; and, recombining said first, second, third and fourth fractions in producing said recycled paper.

11. The method of claim 10 wherein said third fraction comprises approximately 30.0 to 70.0% long fibers based upon the weight of said mechanical pulp.

12. The method according to one of claims 10 or 11 wherein ozone is introduced to said third fraction in a charge between approximately 0.5 to 3.0% based upon the weight of pulp in said third fraction.

13. The method according to one of claims 10 to 12 wherein when said pulp is contained in said third fraction at consistencies between approximately 0.1 to 3.0% or between approximately 25.0 to 45.0% by weight, said ozone is employed at pressures between approximately 15 to 20 psig.

14. The method according to one of claims 10 to 13 wherein when said pulp is contained in said third fraction at consistencies between approximately 8.0 to 15.0% by weight, said ozone is employed at pressures between approximately 50 to 150 psig.

15. The method according to one of claims 10 to 14 wherein said ozone is introduced into said third fraction while maintaining said third fraction at a temperature between approximately 20 to 80°C.

16. The method according to claims 10 to 15 wherein said ozone is introduced into said third fraction for a period of time between approximately 1 to 60 minutes.

17. A method of improving the quality of paper products made from or virgin high yield pulp having long and short fibers comprising fractionating said virgin high yield pulp to produce a first fraction rich in long fibers and a second fraction rich in short fibers; subjecting only said first fraction to ozone; and recombining said first and second fractions in producing said paper products.

18. The method of claim 17 wherein said first fraction comprises approximately 30.0 to 70.0% long fibers based upon the weight of said pulp.

19. The method of claim 17 or 18 wherein ozone is introduced to said first fraction in a charge between approximately 0.5 to 3.0% based upon the weight of pulp in said first fraction.

**European Patent Office**

## EUROPEAN SEARCH REPORT

Application Number

EP   93 40 1777

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 388 934 (MYRENS VERKSTED A/S) | 1,4,10,17 | D21C9/153 D21C5/02 |
| Y | * the whole document * | 3,5-8,12-16,19 | |
| | --- | | |
| X | EP-A-0 087 377 (SOCIETE DES PAPETERIES SCHERB ET METENETT) | 1,2 | |
| Y | * the whole document * | 5-8 | |
| | --- | | |
| Y | EP-A-0 426 652 (LENZING AKTIENGESELLSCHAFT) * abstract * | 3,5-8,12-16,19 | |
| | --- | | |
| A | DE-A-2 908 660 (J.M.VOITH GMBH) * the whole document * | 1 | |
| | ----- | | |
| | | | TECHNICAL FIELDS SEARCHED (Int. Cl.5 ) |
| | | | D21C |

The present search report has been drawn up for all claims

| Place of search | Date of completion of the search | Examiner |
|---|---|---|
| THE HAGUE | 19 OCTOBER 1993 | SONGY O.M-L.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)